# EUROPEAN PATENT APPLICATION

(11) **EP 1 936 543 A1**
(43) Date of publication of application: **25.06.2008**
(21) Application number: 07255011.4
(22) Date of filing: 21.12.2007
(51) Int. Cl.: G06K 19/067

(54) **Radio frequency identification**

(30) Priority: 22.12.2006 GB 0625812
(71) Applicant: Fortium Technologies Ltd., Bennett Street Bridgend Glamorgan CF31 3SH (GB)
(72) Inventor: Miles, Anthony, Bridgend Glamorgan CF31 3SH (GB); Miles, Robert Glyn, Bridgend Glamorgan CF31 3SH (GB)
(74) Representative: Cross, James Peter Archibald

(57) **Abstract**

An RFID tag comprises an array of antennas resonant at discrete frequencies. Each antenna can be modified by application of a high power RF signal so as to reduce its resonance or change its resonant frequency, thereby writing information to the array of antennas.

## Description

### Field of the Invention

The present invention relates to radio frequency identification, and particularly but not exclusively to a passive writable radio-frequency identification tag.

### Background of the Invention

Radio frequency identification (RFID) generally involves generating a radio-frequency electromagnetic signal that interacts with a tag or similar device. The interaction of the signal with the tag is detected and used to decode information recorded in the tag. RFID has been proposed for a variety of applications, such as inventory control.

RFID has been proposed as a replacement to optical identification systems, such as barcode readers, but has not been widely adopted because of the higher cost, size and/or weight of RFID tags compared to barcodes.

Another problem is the difficulty in encoding information in an RFID tag. In RFID tags incorporating an electronic chip, the information may be encoded within the chip. However, the chip adds to the cost of the RFID tag.

EP-A-0 845 754 discloses an RFID system in which the tag comprises a plurality of resonators, such as thin dipoles. The resonators may be coupled to resonance modifying means, such that application of a sufficiently high RF power level changes the resonant frequency of the resonators.

AU-A-50630/93 discloses an RFID system with resonators having different detection and bum-out frequencies; foil forming the bum-out resonator has a narrow part that bums out due to high current density.

### Statement of the invention

According to one aspect of the present invention, there is provided an RFID tag comprising a plurality of resonators having corresponding discrete resonant frequencies, each resonator including a weak point arranged to create an electrical discontinuity when the resonator is subjected to a high power RF signal at the corresponding resonant frequency. The resonators may comprise printed or embedded conductive tracks or shapes, each having a thinner section forming the weak point.

According to another aspect of the invention, there is provided an RF transmitter for reading information from and writing information to a resonant RFID tag, the transmitter being operable to transmit a signal at a selectable one of a plurality of frequencies corresponding to resonant frequencies of the RFID tag, the transmitter having a low power setting for reading information from the resonant array RFID tag and a high power setting for writing information to the resonant array RFID tag.

According to another aspect of the invention, there is provided an RF transmitter for reading a resonant RFID tag, the transmitter being operable to transmit a signal at a selectable one of a plurality of frequencies corresponding to resonant frequencies of the RFID tag, and further including a power detector for detecting a reduction in the output power of the RF transmitter so as to determine the presence of a resonant component of the resonant array at the selected frequency.

### Brief Description of the Drawings

Embodiments of the invention will be described with reference to the drawings, as follows.
Figure 1 is a diagram of an RFID system in an embodiment of the invention.
Figure 2 shows one example of an RFID tag according to an embodiment of the invention.
Figure 3 shows further examples of RFID tags according to other embodiments of the invention.

### Detailed Description of the Embodiments

### Reading

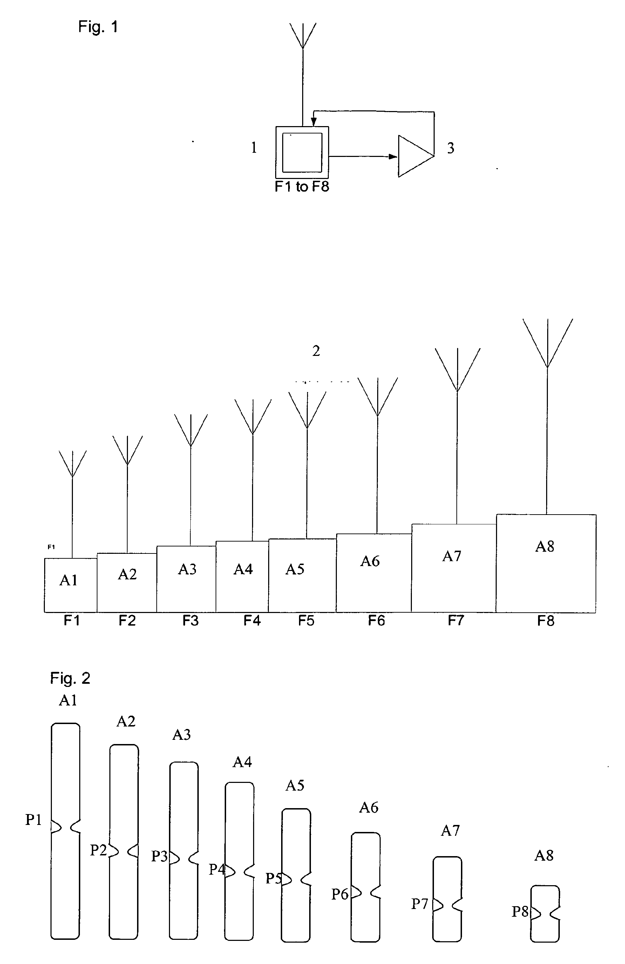

As shown in Figure 1, an RF transmitter 1 generates an RF signal that of variable frequency over the frequencies F1 to F8. A resonator array 2 comprises one or more resonators A1 to A8 that resonate at the corresponding frequencies F1 to F8. A detector 3 detects when the RF signal is at a resonant frequency F1-F8 of one of the resonators A1-A8 and generates an output that indicates that the presence of the corresponding resonator A1-A8 has been detected. This output indicates information encoded within the resonator array; in other words, the information is represented by the presence or absence of each of the resonators A1-A8. Hence, the resonator array 2 is suitable for use as an RFID tag.

The detector 3 may comprise a power detector 3 coupled to the RF transmitter 1. When the RF signal is at the resonant frequency F1-F8 of one of the resonators A1-A8 present in the resonator array, the transmitter power diminishes and this is detected by the detector 3. Alternatively, the detector 3 may detect attenuation of the RF signal after it has passed the resonator array 2: when the RF signal is at one of the resonant frequencies F1-F8, the RF signal is attenuated and the attenuation is detected by the detector 3.

As shown in Figure 2, the resonators A1-A8 may consist of a plurality of dipole antennas of different lengths. The resonant frequency F1-F8 of each antenna is determined by its length, with shorter lengths giving higher frequencies, and the length being a fraction of the wavelength of the resonant frequency. The lengths of the antennas are predetermined so that the antennas have corresponding ones of the resonant frequencies F1-F8.

Only selected ones of the resonators A1-A8 need be present and/or functional in the resonator array 2. Hence, the information present in an RFID tag may be encoded in the number and lengths of the resonators in the resonator array 2.

Each resonator A1-A8 may consist of a length of conductive material, with a common ground plane. The conductive material may printed or otherwise applied onto an insulating substrate, thus providing a printable RFID tag that can be manufactured without the disadvantages of size, cost and/or weight of RFID tags in the prior art.

Alternatively, the conductive material may be embedded within a substrate and/or the object to be tagged.

The resonators A1-A8 need not be linear, but may have any shape or form so long as they resonate at the desired frequencies F1-F8.

### Writing

As shown in Figure 2, each of the resonators A1-A8 has an electrically weak point P1-P8 along its length, arranged to undergo a change when the corresponding resonator A1-A8 is subjected to a high power RF signal at the corresponding resonant frequency. For example, the electrically weak point P1-P8 may 'blow' (e.g. change to an open circuit condition) when it is no longer able to withstand the electric field or absorbed energy from the high power RF signal, thereby separating the resonator A1-A8 into electrically disconnected parts, neither of which are resonant at any of the frequencies F1-F8.

To write information to the resonant array 2, the RF transmitter 1 is operated at a higher power level than is used for reading; either the power level of the RF transmitter 1 is selectable between a low power 'read' level and a high power 'write' level, or separate RF transmitters are used for reading and writing. The RF transmitter is set to transmit at the resonant frequency F1-F8 of the resonator A1-A8 to be 'blown', and the high power RF signal is transmitted under conditions sufficient to 'blow' that resonator. The writing process may be repeated for other ones of the resonators A1-A8 until the desired information is recorded.

The writing process is essentially irreversible, but this is not a disadvantage as the RFID tag is not intended to be re-usable. Of course, it would be possible to blow further resonators at a subsequent stage, thereby changing further '0' bits to '1'.

### Method of operation

In method of operation according to an embodiment of the invention, the resonant array 2 consists of the resonators A1-A8, each corresponding to a 'bit' of information to be recorded, giving one 8-bit byte of information. In an initial state, all of the resonators A1-A8 are functional, corresponding to a bit value of'00000000'.

It is then desired to record the byte value '01010101' in the resonant array 2, requiring resonators A2, A4, A6 and A8 to be blown. The RF transmitter 1 is set to the high power level, and the RF signal frequency is set to F2, F4, F6 and F8 in turn, essentially discontinuously and remaining at each frequency for a period sufficient to blow the corresponding resonators.

To read the written information, the RF transmitter 1 is set to the low power level, and the RF signal frequency is set to each of F1 to F8 in turn. At each frequency, the detector 3 detects absorption of the signal by the resonant array 2; if the signal is attenuated, a bit value '1' is recorded, otherwise a bit value of '0' is recorded. The recorded bit values indicate the byte recorded in the resonant array 2.

### Applications

Embodiments of the invention provide a light, low-cost RFID tag that enables applications that have hitherto not been possible. For example, the tag could be applied to disc media such as a CD, DVD or Blu-ray disc, without substantially affecting the balance of the disc media. The resonant array 2 may be embedded within the disc at the time of manufacture, with data being written to the resonant array 2 subsequently. Alternatively, the resonant array 2 may be printed on the surface of the disc.

The tag may be embedded in other products at the time of manufacture, and subsequently written to create an identity code for the product. The identity code may be written by the purchaser or end user by means of a dedicated RF transmitter 1, allowing products to be tagged so as to deter theft.

### Alternative embodiments

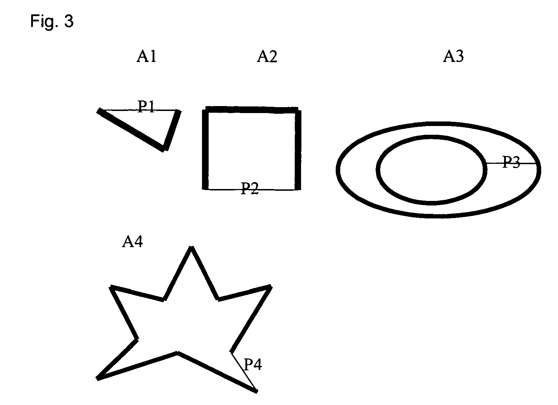

Figure 3 shows further embodiments of resonators A1 - A4 according to embodiments of the invention. In each resonator, the thick lines represent conductive tracks and the thin lines are the weak points P1-P4 that may be blown to alter the resonant characteristics of the artefact.

As can be seen, the resonators may be of any shape that provides an electromagnetic path that includes a thin conductor that will be blown upon the application of a high burst of RF energy at the corresponding resonant frequency. The resonators may be formed as logos, pictograms, letters or symbols of any shape and may even form a printed description of the product.

Alternatively, the resonators may be part of the structure of the product, or may be embedded within the product.

Other forms of resonant device or means may be used. Other embodiments and/or applications may be envisaged, within the scope of the invention.

## Claims

1. An RFID tag comprising an array (2) of resonators (A1-A8) each having corresponding discrete resonant frequencies (F1-F8), each resonator comprising a conductive portion including a weak section (P1-P8) arranged to create an electrical discontinuity when the resonator is subjected to a high power RF signal at the corresponding resonant frequency.

2. The tag of claim 1, wherein the weak section (P1-P8) comprises a thinned section of the conductive portion.

3. An RFID tag comprising an array (2) of resonators (A1-A8) having corresponding discrete resonant frequencies (F1-F8), each resonator being responsive to a high-power RF signal at the corresponding resonant frequency so as to change the resonant frequency, wherein the array of resonators is applied to or embedded within a product.

4. The tag of claim 3, wherein the resonators (A1-A8) form visible indicia.

5. The tag of claim 4, wherein the indicia include a visual identification of the product.

6. An RF transmitter (1) for reading information from and writing information to a resonant array RFID tag, the transmitter being operable to transmit a signal at a selectable one of a plurality of frequencies (F1-F8) corresponding to resonant frequencies of the RFID tag, the transmitter (1) having a low power setting for reading information from the resonant array RFID tag and a high power setting for writing information to the resonant array RFID tag.

7. An RF transmitter (1) for reading a resonant array RFID tag, the transmitter being operable to transmit a signal at a selectable one of a plurality of frequencies (F1-F8) corresponding to resonant frequencies of the RFID tag, and further including a power detector (3) for detecting a reduction in the output power of the RF transmitter so as to determine the presence of a resonant component (A1-A8) of the resonant array (2) at the selected frequency.

8. A method of reading information from a resonant array RFID tag, comprising transmitting an RF signal at each of a plurality of frequencies (F1-F8) corresponding to potential resonant frequencies of the RFID tag, detecting whether each of the frequencies is absorbed by a corresponding resonant component (A1-A8) of the resonant array, and determining therefrom the information recorded in the resonant array.
